# EUROPEAN PATENT SPECIFICATION

(11) **EP 1 586 995 B1**
(45) Date of publication and mention of the grant of the patent: **29.10.2008**
(21) Application number: 04019064.7
(22) Date of filing: 11.08.2004
(51) Int. Cl.: G06F 9/48

(54) **Digital controller controlling execution of periodic control tasks**
Digitales Steuerungsgerät zur Steuerung der Durchführung von periodischen Steuerungsaufgaben
Contrôleur numérique pour contrôler l'execution de tâches de contrôle périodiques

(30) Priority: 14.04.2004 JP 2004119124
(43) Date of publication of application: 19.10.2005
(73) Proprietor: Hitachi, Ltd., Chiyoda-ku Tokyo 100-8280 (JP)
(72) Inventor: Ichinose Masanori c/o Hitachi Ltd. Int.Prop.Group, Chiyoda-ku Tokyo 100-8220 (JP); Yokoyama Takanori c/o Hitachi Ltd. Int.Prop. Group, Chiyoda-ku Tokyo 100-8220 (JP)
(74) Representative: Beetz & Partner

(56) References cited:
- AYDIN H ET AL: "Optimal reward-based scheduling of periodic real-time tasks" REAL-TIME SYSTEMS SYMPOSIUM, 1999. PROCEEDINGS. THE 20TH IEEE PHOENIX, AZ, USA 1-3 DEC. 1999, LOS ALAMITOS, CA, USA,IEEE COMPUT. SOC, US, 1 December 1999 (1999-12-01), pages 79-89, XP010366894 ISBN: 0-7695-0475-2
- LEUNG J Y-T ET AL: "Minimizing the number of late tasks with error constraint" PROCEEDINGS OF THE REAL TIME SYSTEMS SYMPOSIUM. LAKE BUENA VISTA, DEC. 5 - 7, 1990, WASHINGTON, IEEE. COMP. SOC. PRESS, US, vol. SYMP. 11, 5 December 1990 (1990-12-05), pages 32-40, XP010022034 ISBN: 0-8186-2112-5
- HARBOUR M G ET AL: "Fixed priority scheduling periodic tasks with varying execution priority" PROCEEDINGS OF THE REAL TIME SYSTEMS SYMPOSIUM. SAN ANTONIO, DEC. 4 - 6, 1991, LOS ALAMITOS, IEEE. COMP. SOC. PRESS, US, vol. SYMP. 12, 4 December 1991 (1991-12-04), pages 116-128, XP010026201 ISBN: 0-8186-2450-7
- MERCER C W ET AL: "The ARTS real-time object model" PROCEEDINGS OF THE REAL TIME SYSTEMS SYMPOSIUM. LAKE BUENA VISTA, DEC. 5 - 7, 1990, WASHINGTON, IEEE. COMP. SOC. PRESS, US, vol. SYMP. 11, 5 December 1990 (1990-12-05), pages 2-10, XP010022031 ISBN: 0-8186-2112-5

## Description

### BACKGROUND OF THE INVENTION

### 1. Field of the Invention

The present invention relates to a digital controller for periodically executing a control task and an engine controller using the digital controller.

### 2. Description of the Related Art

In general, in a controller for periodically executing a control task, a timer for starting the control task is disposed in a CPU, and periodic execution of the control task is achieved by periodically executing the control task in response to an interrupt signal periodically generated by the timer. Such a controller is widely used to control various kinds of devices. For example, the digital controller is widely used to control an actuator mechanism. In general, a value indicating the state of the actuator to be controlled is measured using a sensor, and the measured value is captured in digital form by a CPU. The measured value is compared with a target value calculated by the CPU, and a control signal is created based on the comparison result. The actuator mechanism is controlled in accordance with the control signal.

In such a digital controller, it is required that the digital controller should have sufficiently high processing capability to ensure that the execution of the control task at each control cycle can be completed in a sufficiently short time compared with the control cycle. Various techniques have been proposed to further ensure that the control task is correctly executed at specified intervals.

For example, it is known to record the number of times an interrupt request occurs during execution of a task, and execute tasks in order of priority as many times as recorded number (JP6-200820A). By using such a technique to start tasks, the processing load can be averaged and necessary control tasks can be executed one by one.

However, in some cases, such task allocation cannot handle a large processing load change, and the processing load can exceed the processing capability of the CPU. In such a case, some control task is delayed or skipped without being executed. That is, a control error can occur in such a situation. To avoid above problem, it is known to increment a counter each time a task in a program is started, and decrement the counter each time a task is completed, thereby monitoring the program execution status (JP5-158745A). In this technique, the counter value is maintained as long as the program is correctly executed, but a change in counter value occurs if the program is not correctly executed. Therefore, by checking the counter value, it is possible to detect the program execution status, that is, it is possible to determine whether the program is being correctly executed without encountering a delay or skip due to an overrun. By resetting the counter as required, it is possible to prevent the program from runaway.

To continue the operation even in a state in which a high processing load is imposed on the CPU, it has been proposed to use a correction control program and processing load detection means. If the processing load detection means detects a processing load greater than a threshold, the correction control program is interrupted(JP2002-366374A).

It has also been proposed to use a state observer in controlling of a device. In this technique, only a state value such as a displacement that can be easily measured is measured using a sensor, and other necessary state values such as a speed, an acceleration, or a disturbance are determined by means of a calculation using the observer (Masatake Shiraishi, "Introduction to Modern Control Theory", Nikkan-Kogyo Shinnbun-sha, p.109, 1995).

However, the conventional digital controller, which starts tasks in the above-described manner, has the following problems. First, because averaging of the load is achieved by means of scheduling of starting of tasks, if many tasks that need long processing times close to the upper limit are successively executed, an execution of a control task that must be executed periodically is postponed again and again, and thus the control task is not correctly executed at specified intervals. This makes it impossible to execute the control task in real time. If the control task is skipped due to an occurrence of a large delay of a previous another task, the task is not started until a next interval, and thus the task execution interval temporarily becomes twice the normal interval. In the case in which the control task is a time-dependent process including a calculation using a parameter associated with a time length (execution interval) as in the calculation of a speed on the basis of the position of a device to be controlled, the increase in task execution interval due to skipping of the task causes a loss of data in the calculation, which can cause a significant calculation error and thus a control error.

When the control task involves counting the number of interrupt events, skipping of execution of the control task results in skipping of counting. Another problem is that because it is needed to perform complicated processing such as management of priority of tasks or detection of task start requests, a large processing load associated with the task start process is imposed on the CPU, and thus a reduction occurs in processing power available for execution of the actual control task.

In the case of the digital controller that monitors the program execution status, if many tasks that need long processing times close to the upper limit are successively executed, an occurrence of a task overrun can cause a current control task to be interrupted even when it is desirable to continue the current control task. To continue a control task without interrupting it, the load variation must be controlled within a small range.

The article of LEUNG J Y-T ET AL: "Minimizing the number of late tasks with error constraint" PROCEEDINGS OF THE REAL TIME SYSTEM SYMPOSIUM. LAKE BUENA VISTA, DEC. 5 - 7, 1990, WASHINGTON, IEEE. COMP. SOC. PRESS, US, vol. SYMP. 11, 5 December 1990 (1990-12-05), pages 32-40, XP010022034 ISBN: 0-8186-2112-5 teaches minimizing the number of late tasks in a so-called imprecise computation model an error constraint. In the imprecise computation model, each task consists of two sub-tasks, mandatory and optional. The imprecise computation model is useful in modeling iterative algorithms, where the optional part corresponds to an enhancement of previously obtained results.

The article of AYDIN H Et AL: "Optimal reward-based scheduling of periodic real-time tasks" REAL-TIME SYSTEMS SYMPOSIUM, 1999. PROCEEDINGS. THE 20TH IEEE PHOENIX, AZ, USA 1-3 DEC. 1999, LOS ALAMITOS, CA, USA, IEE COMPUT. SOC, US, 1 December 1999 (1999-12-01), pages 79-89, XP010366894 ISBN: 0-7695-0475-2 considers a set of n periodic real time tasks on a uniprocessor system. The tasks are known in the advance and the schedule is calculated. The latter article is restricted to so-called "error non-cumulative applications".

The article of HARBOUR M G ET AL: "Fixed priority scheduling periodic tasks with varying execution priority" PROCEEDINGS OF THE REAL TIME SYSTEMS SYMPOSIUM. SAN ANTONIO, DEC. 4 - 6, 1991, LOS ALAMITOS, IEEE. COMP. SOC. PRESS., US, vol. SYMP. 12, 4 December 1991 (2991-12-04), pages 116-128, XP010026201 ISBN: 0-8186-2450-7 teaches to avoid task overrun by intelligent scheduling, such that handling a task overrun does not have to be dealt with.

### SUMMARY OF THE INVENTION

In view of the above, it is an object of the present invention as set out in claim 1 to provide a digital controller capable of controlling execution of control tasks such that a control task, which needs to be executed at predetermined intervals, is certainly executed at the predetermined intervals.

In order to achieve the above objects, the present invention provides a digital controller which may comprise execution control means for controlling execution of a control task so as to be executed at predetermined intervals, and/or interrupt disable means for, when the control task is being executed, disabling an interrupt for any other control task or any other task. The control task may be divided into two parts: a first task part that should be certainly executed at the predetermined intervals; and/or a second task part including the remaining part of the control task other than the first task part. Furthermore, execution control means may be provided wherein, when the execution control means detects an overrun of the control task as a result of a failure to complete the control task within the predetermined interval, a next execution of the control task is performed such that at least the first task part of the control task in the next execution is completed within the period of the next interval.

In this digital controller according to the present invention, even if the control task overruns in execution, the first task part including the process using the parameter associated with the predetermined interval is certainly executed, and thus neither a loss of data nor a significant calculation error occurs. This allows an improvement in reliability of the control task including the second task part that performs a process using the result of the first task part. When a control task is being executed, the interrupt disable means disables an interrupt for any control task other than the control task being executed. Thus, when the first task part or the second task part is being executed, any other task is not executed. This ensures that the control task is correctly executed at specified intervals.

In this digital controller according to the present invention, the first task part may be a task including a calculation using a parameter associated with the predetermined interval, and the second task part may be a task including a process using the result of the calculation performed in the first task part.

More specifically, the execution control means may control execution of control tasks such that the execution control means disables interrupt for next execution of the control task until the execution of the second task part of the overrunning control task is completed, and, after completion of the second task part, the execution control means executes only the first task part of the control task in the next execution of the control task. This allows the second task part being processed to be completed without being interrupted. The completion of the second task part ensures that the result of the control task can be used. In any situation, at least the first task part of the control task is executed without being skipped. Therefore, it is ensured that the first task part is executed as many times as needed, and thus no loss of time-dependent data occurs. If an overrun occurs in a control task, then, in a following execution of the control task, the time-dependent data has an error equal to the delay due to the overrun. When it is undesirable to have such an error, the error can be prevented as follows. If an interrupt signal for a next execution of the control task occurs when the second task part is being executed, the second task part is interrupted and only the first task part is executed in the next execution of the control task. This ensures that the first task part is executed at correct intervals, and thus no error occurs in the calculation result. In this case, the interrupted second task part can be resumed after completion of the first task part. This prevents a loss of control data due to the interrupt of the second task part.

As described above, the digital controller according to the present invention ensures that the part of the control task that should be executed at specified intervals is correctly executed at specified intervals and thus no loss of time-dependent data occurs.

### BRIEF DESCRIPTION OF THE DRAWINGS

Fig. 1 is a flow chart showing a process performed by a digital controller to control execution of control tasks, according to an embodiment of the present invention;
Fig. 2 is a block diagram of a digital controller according to an embodiment of the present invention;
Figs. 3A and 3B are timing charts associated with the process, shown in Fig. 1, of controlling execution of control tasks according to the embodiment of the present invention;
Fig. 4 is a time chart associated with input/output signals associated with the process, shown in Fig. 1, of controlling execution of control tasks according to the embodiment of the present invention;
Fig. 5 is a flow chart showing a process performed by a digital controller to control execution of control tasks, according to an embodiment of the present invention;
Fig. 6 is a time chart associated with the process, shown in Fig. 5, of controlling execution of control tasks according to the embodiment of the present invention;
Fig. 7 is a circuit diagram showing an overrun detection circuit according to an embodiment of the present invention;
Fig. 8 is a block diagram showing a digital controller according to an embodiment of the present invention;
Fig. 9 is a flow chart showing a process of detecting an overrun and controlling execution of control tasks, according to an embodiment of the present invention; and
Fig. 10 is a block diagram of an engine controller for controlling an engine of a vehicle, using a digital controller according to an embodiment of the present invention.

### DESCRIPTION OF THE PREFERRED EMBODIMENTS

Embodiments of the present invention are described below with reference to the accompanying drawings.

### First Embodiment

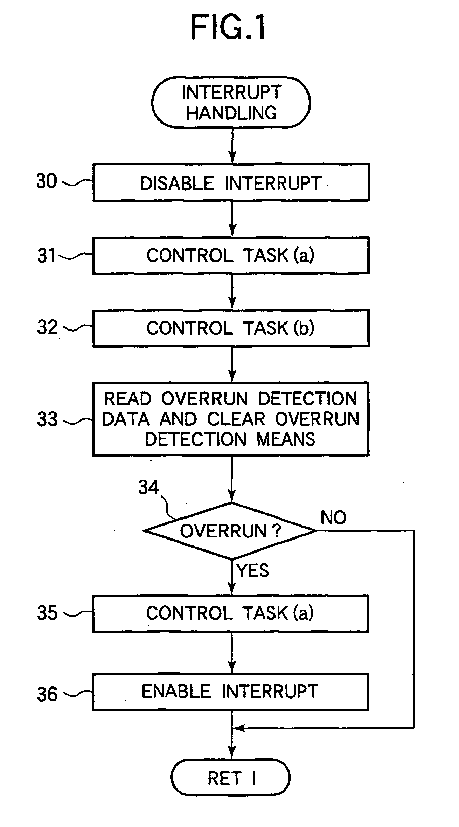

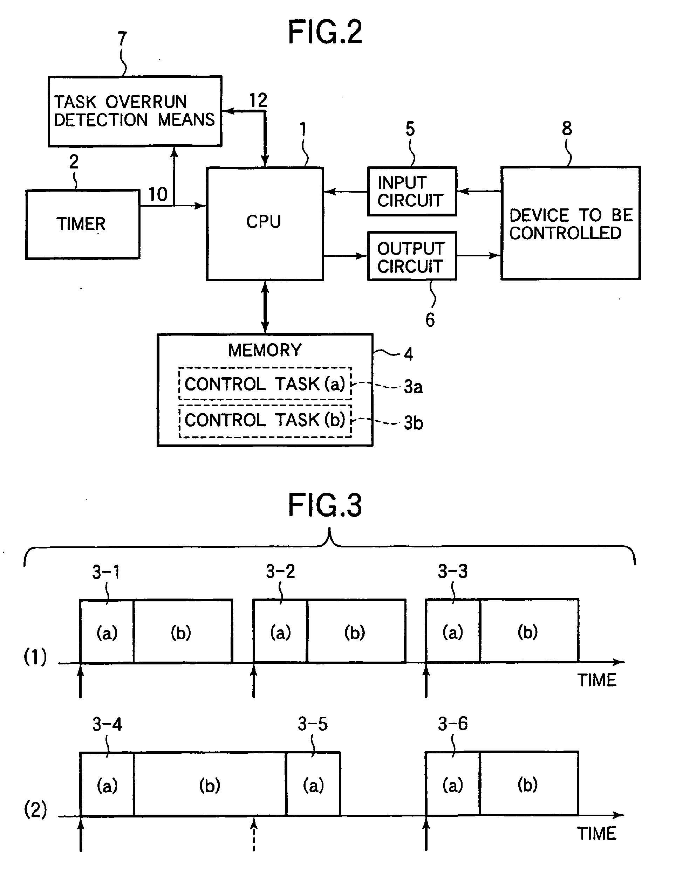

Fig. 1 is a flow chart showing a process performed by a digital controller to control execution of control tasks, according to a first embodiment of the present invention. Fig. 2 is a block diagram of the digital controller according to the present embodiment. As shown in Fig. 2, the digital controller includes a CPU 1, a timer 2 for generating an interrupt signal at predetermined intervals, a memory 4 for storing a control task 3, an input circuit 5, an output circuit 6, and task overrun detection means 7. A device 8 to be controlled by the digital controller is connected with the CPU 1 via the input circuit 5 and the output circuit 6. The memory 4 is connected to the CPU 1 such that the memory 4 is accessible by the CPU 1. The memory stores a program of the control task 3 and also stores other data such as temporary data.

The CPU 1 executes the control task 3 including the steps of acquiring the value indicating the state of the device 8 from the device via the input circuit 5, calculating the control amount to be applied to the device 8 on the basis of the acquired value indicating the state of the device 8, and outputting the determined control amount to the device 8 to be controlled via the output circuit 6. The value of the state of the device 8 is measured by a sensor disposed on the device 8 and is fed back to the CPU 1 via the input circuit 5.

The CPU 1 includes task execution control means for controlling execution of the control task 3 in response to an interrupt signal 10 output from the timer 2, and interrupt disable means for disabling interrupts for the other tasks when the control task 3 is being executed. The interrupt signal 10 functions as a trigger that causes the control task 3 to start. The CPU 1 is capable of masking the interrupt signal 10 associated with the control task 3. When a mask command is executed by the CPU 1, the interrupt signal 10 is ignored even if the interrupt signal 10 is input.

The control task 3 includes a control task 3a that is a first task part including a calculation using a calculation parameter associated with the interval T of the interrupt signal 10, and a control task 3b that is a second task part including a process using the result of the calculation performed in the control task 3a. That is, the control task 3a is a time-dependent task, and the control task 3b is a time-independent task that does not include a calculation parameter associated with the execution interval T. An example of a process of a time-dependent task is described below. The time-dependent task refers to a process including a calculation using a parameter associated with the execution interval. A specific example is a process of calculating the value indicating the state of a device to be controlled. If execution of a time-dependent task is skipped, an inconsistency occurs between the actual calculation interval and the calculation parameter associated with the time, and thus a calculation error occurs which can cause a control error. For example, in the case in which motion of an object is controlled as in the case in which the position of an actuator is controlled, it is necessary to detect the value indicating the state of the object, such as a position or a speed. However, the sensor can measure only the value of a particular type of state such as a displacement. Therefore, the values of other states such as a speed, an acceleration, and a disturbance are determined using a state observer. In the state observer, as described in "Introduction to Modern Control Theory" (Masatake Shiraishi, Nikkan-Kogyo Shinnbun-sha, p.109, 1995) cited above, processing is performed such that a model to be controlled converges to a value measured by the sensor. In general, the model is given by a discrete differential equation represented in the form of a matrix equation. Because the speed is expressed by a differential term in the equation, the equation includes a coefficient indicating the execution interval of the control task. Therefore, to precisely calculate the state values, it is necessary to precisely control the execution interval. To meet the above requirement, the processing associated with the state observer is assigned to the control task 3a. Another good example of the control task 3a is a watch dog timer for watching whether a program is correctly executed without runaway. The watch dog timer periodically outputs a signal to the outside to notify that the program is being correctly executed. If the task is skipped and no signal is output from the watch dog timer, it is incorrectly determined that an operation error occurs in the program, and thus the CPU 1 is reset. As described above, a process that needs precise control of the execution interval to achieve correct operation is advantageously assigned to the control task 3a.

The interrupt signal 10 generated by the timer 2 is input to the task overrun detection means 7. Each time the interrupt signal 10 is input to the task overrun detection means 7, the counter indicating the number of occurrences of the interrupt signal 10 is incremented. On the other hand, the counter is decremented in response to an access by the CPU 1, and the resultant counter value is output to the CPU 1. That is, the CPU 1 accesses the counter disposed in the task overrun detection means 7 to examine whether the counter value is equal to "0" to determine whether the control task 3 is completed within the specified interval T. A specific example of the task overrun detection means 7 will be described later.

The detailed structure and operation of the task execution control means for controlling execution of the control task, which is an essential part of the digital controller according to the present embodiment of the invention, are described below with reference to a flow chart shown in Fig. 1. As shown in Fig. 1, the execution control means for controlling execution of control tasks starts in response to an interrupt signal 10 generated by the timer 2. In step S30, a further interrupt for the control task 3 or for any other task is disabled. In steps S31 and S32, the control tasks 3a and 3b of the control task 3 requested by the interrupt signal 10 are read from the memory 4 and executed. Then in step S33, overrun detection data is read from the task overrun detection means 7, and the overrun detection means 7 is cleared. In step S34, on the basis of the overrun detection data, it is determined whether there is an overrun. If no overrun is detected, the process exits. On the other hand, if an overrun is detected in the control task 3 being executed, the process proceeds to step S35. In step S35, only the control task 3a of the next control task 3 is executed. After completion of the control task 3a, an interrupt is enabled and the process exits.

The process is described in further detail below with reference to a timing chart shown in Figs. 3A and 3B. Fig. 3A shows a manner in which tasks are executed in the normal state without encountering an overrun. In response to the interrupt signal 10 generated periodically, control tasks 3-1, 3-2, and 3-3 are started. Note that occurrences of the interrupt signal 10 are represented by solid arrows in Fig. 3A. In Fig. 3A, the control tasks 3a and 3b are denoted by (a) and (b), respectively. In general, when a task is started in response to a timer interrupt, further interrupts are masked to disable any further interrupt during the execution of the task thereby preventing simultaneous execution of a plurality of tasks. Also in the present embodiment, to prevent an operation error and runway of the program, a further interrupt is masked if a task is started in response to an interrupt request (step S30 in Fig. 1).

When the control tasks 3a and 3b are executed while masking further interrupts, a task overrun can occur if the execution of the control task 3 needs a longer time than the predetermined interval T due to an increase in processing load. In this state, because the interrupt signal for a next execution of the control task 3 is masked, the execution of the control task 3 is skipped until the next interval, if no action is taken. The skipping of the control task 3 by one interval prevents a problem caused by unavailability of the task execution time or runaway of the program. However, as a result of skipping, the execution interval of the control task 3 temporarily becomes twice the normal execution interval. In the case in which the control task includes a time-dependent process using a parameter associated with the interval as in the calculation of the speed of an object to be controlled, the skip of the control task results in a significant calculation error that can cause a significant control error.

In the present embodiment, to avoid the above problem, the control task 3 is divided into two parts, that is, the time-dependent control task 3a and the time-independent control task 3b, and detection of a task overrun is performed at the end of each execution of the control task 3. If a task overrun is detected in step S34 in Fig. 1, only the time-dependent control task 3a is executed in step S35 in Fig. 1. Fig. 3B shows an example of a manner in which execution of the control task 3 is controlled when a task overrun occurs. In response to an interrupt signal represented by a solid arrow in Fig. 3B, a control task 3-4 is started. In this specific example shown in Fig. 3B, a large processing load occurs when the control task 3-4 is being executed, and thus the control task 3-4 is not completed in a period T of the predetermined interval, that is, a task overrun occurs. An interrupt signal for execution of a next control task 3-5 following the control task 3-4 occurs as represented by a broken arrow in Fig. 3B. However, this interrupt signal is masked because of the occurrence of the task overrun, and thus the control task 3-5 is not started. The detection of a task overrun can be performed as follows. That is, at the end of the execution of the control task 3b of the control task 3-4, data indicating whether the task is completed in the specified interval corresponding to the control interval is read from the task overrun detection means 7, and the determination as to whether a task overrun occurs is made on the basis of the data. In the example shown in Fig. 3B, the current control task is not completed before the occurrence of the interrupt signal for the next control task 3-5, and thus it can be concluded that a task overrun has occurred. In this case, as shown in step S35 in Fig. 1, in response to the occurrence of the task overrun, execution of tasks is controlled such that for the control task 3-5 corresponding to the ignored interrupt signal, only the control task 3a is executed thereby preventing an error in the number of times the time-dependent task is executed. In other words, the time-dependent control task (a) is certainly executed in the predetermined interval T, as can be seen from Fig. 3B.

In the present embodiment, as described above with reference to Fig. 1, even if a task overrun occurs, the control task 3a including the process using the parameter associated with the predetermined interval T is certainly executed in the interval, and thus no error occur in terms of the number of times the time-dependent task is executed. Therefore, the calculation error can be minimized, and the calculation accuracy of the control task 3b using the calculation result of the control task 3a can be improved. As a result, the control accuracy can be improved.

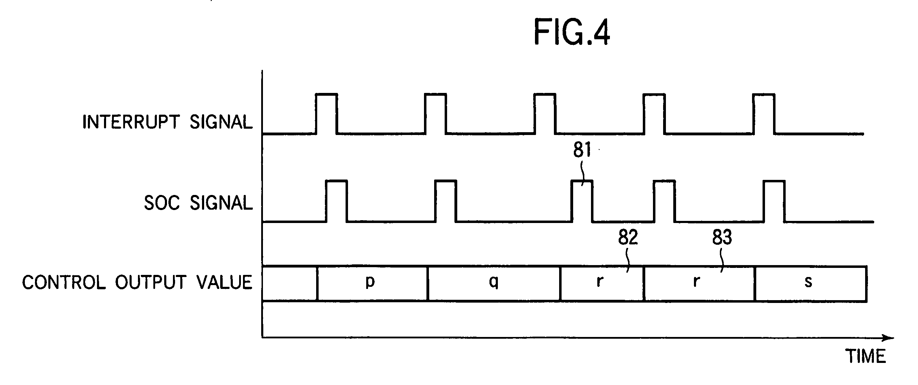

The digital controller according to the present embodiment may be applied to an A/D conversion process in a state observer. In this case, the process associated with the state observer is assigned as a time-dependent task to the control task 3a. Fig. 4 shows an example of a manner in which input/output signals associated with the digital controller occur. As shown in Fig. 4, although the timer interrupt signal 10 is input at equal intervals, a delay in starting of the control task 3 can occur depending on the end time of the previous execution of the control task 3. More specifically, when a great increase in processing load occurs, a delay can occur in an SOC (Start Of Conversion) signal to the A/D converter relative to the interrupt signal 10, as is the case with a signal denoted by reference numeral 81 in Fig. 4. A similar delay also occurs in the output of the watch dog timer. When such a delay occurs, the time-independent control task 3b is skipped in response to an occurrence of a task overrun, and the control output in interval 82 is maintained as the control output in interval 83 even if a change occurs in the input state value of the object to be controlled.

### Second Embodiment

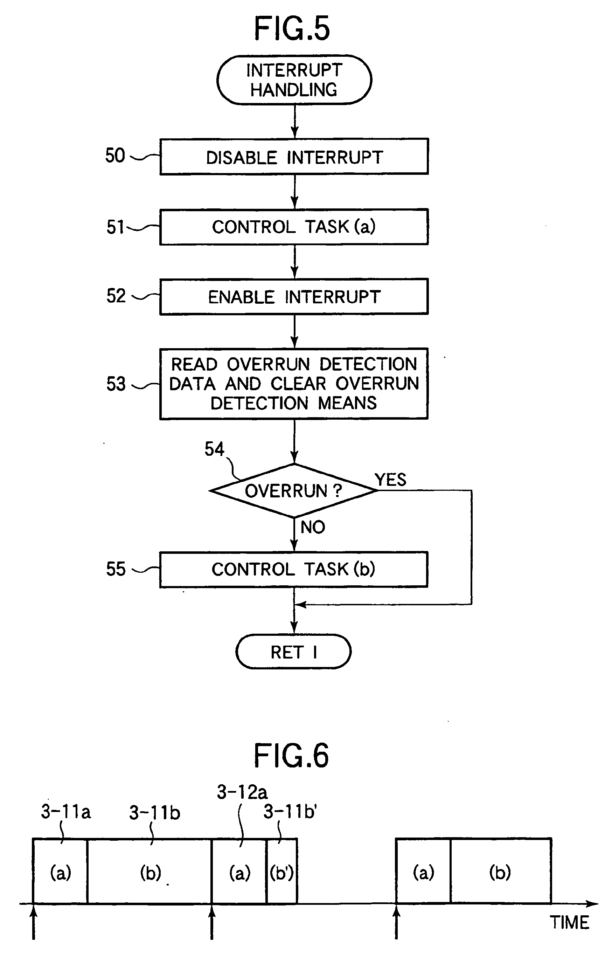

Fig. 5 is a flow chart showing a process of controlling execution of control tasks according to a second embodiment of the present invention. In the previous embodiment described above with reference to Fig. 1, interrupt signals that occur during execution of a control task are masked. Alternatively, in this embodiment, execution of a time-dependent task at predetermined intervals is ensured by masking interrupt signals only during the execution of the control task 3a.

As shown in Fig. 5, the control-task execution control means starts in response to the interrupt signal 10 generated by the timer 2. In step S50, a further interrupt for any other control task 3 or for any other task is disabled. In step S51, only the control task 3a of the control task 3 associated with the interrupt is read from the memory 4 and executed. If the control task 3a is completed, then the disabling of interrupts is released in step S52. In the next step S53, in order to determine whether the current control task 3a is completed within the interval, overrun detection data is read from the task overrun detection means 7 and the task overrun detection means is cleared. In the next step S54, on the basis of the overrun detection data, it is determined whether a task overrun has occurred. If no overrun is detected, the process proceeds to step S55. In step S55, the control task 3b of the current control task 3 is executed. After completion of the control task 3b, the process exits. On the other hand, if a task overrun is detected in step S54, the program immediately exits from the execution control routine.

After the program exits the execution control routine, if an interrupt for a next control task 3 is generated, the execution control means is started again. In step S50, further interrupts are disabled, and the control task 3a of the next control task 3 is executed. That is, because disabling of interrupts is not performed in the previous execution of the control task 3b in step S55, the execution of the control task 3a is started immediately in response to the occurrence of the interrupt for the task 3. That is, unlike the embodiment shown in Fig. 1, the interrupt signal 10 is not masked at all or masked only during the period in which the control task 3a is executed. After completion of the control task 3a, interrupts are enabled, and detection of a task overrun is performed. Herein, even if an overrun is detected, the control task 3a is started in response to a next interrupt signal 10 regardless of whether or not the control task 3b following the control task 3a is completed, because the interrupt signal 10 is not masked. This ensures that the control task 3a is correctly executed at the predetermined intervals without being skipped. In the case in which a next execution of the control task 3a is started when the previous execution of the control task 3b is not yet completed, a task overrun is detected and the interrupted control task 3b is resumed after completion of the control task 3a. Thus, the execution time is adjusted depending on the situation, while precisely controlling the execution interval associated with the time-dependent task.

The process is described in further detail below with reference to Fig. 6. Interrupts occur at intervals represented by solid arrows. In response to a first occurrence of an interrupt, a control task 3-11a is executed. After completion of the control task 3-11a, a control task 3-11b is immediately started. More specifically, when the control task 3-11a is completed, the task overrun detection means 7 is accessed to determine whether the control task 3-11a is completed within the predetermined period T (step S53). If no task overrun is detected (step S54), the control task 3-11b is started (step S55).

In the specific example shown in Fig. 6, a large processing load is imposed when the control task 3-11b is executed, and the control task 3-11b is not completed within the period T assigned to the control task 3. That is, an overrun occurs. In this case, in the present embodiment, because disabling of interrupts is released when the control task 3-11a is completed (step S52), the control task 3-11b is interrupted in response to an interrupt signal for a next control task 3-12a, and only the next control task 3-12a is executed. This allows the time-dependent task to be correctly executed at specified intervals. After completion of the control task 3-12a, the saved data associated with the interrupted control task 3-11b is restored, and the remaining control task 3-11b' is executed.

In the present embodiment, as described above, the interval between the time-dependent control task 3-11a and the time-dependent control task 3-12a becomes exactly equal to the specified execution interval T. This prevents an error in the calculation using the parameter associated with the interval T.

The technique of controlling tasks according to the present embodiment may also be applied to a digital controller including a real-time OS. In this case, interrupts are masked during execution of the time-dependent control task 3a, and the priority of interrupts is set to be higher than that of the time-independent control task 3b. Interrupts are enabled during execution of the control task 3b. Controlling of tasks in the above-described manner allows a program to be described in a small number of steps using the functions of the real-time OS, according to the present embodiment of the invention. In this case, the time-dependent control task 3a is started in response to a timer interrupt, and the time-independent control task 3b is started in response to a software interrupt from the control task 3a or simply in response to a subroutine call.

### Third Embodiment

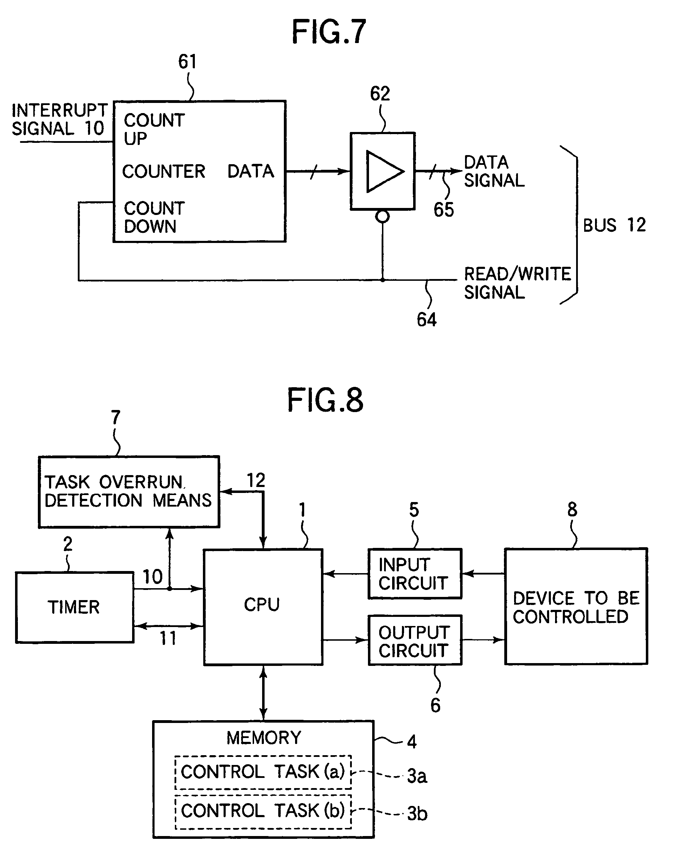

Fig. 7 shows an embodiment of task overrun detection means 7. As shown in Fig. 7, the task overrun detection means 7 includes a counter 61 and a bus buffer 62. The interrupt signal 10 is input to a count-up terminal of the counter 61. Each time the interrupt signal 10 is input, the counter value of the counter 61 is incremented by 1. The counter value of the counter 61 is output from a data output terminal of the counter 61 and supplied to the CPU 1 via the bus buffer 62 and a data bus 65 of a bus 12. A read/write signal 64 output from the CPU 1 is input via the bus 12 to a count-down terminal of the counter 61, and an inverted signal of the read/write signal 64 is input to the bus buffer 62. In this task overrun detection means 7 constructed in the above-described manner, if the CPU 1 raises the read/write signal 64 up to a high level and supplies the high-level read/write signal 64 to the count-down terminal of the counter 61 thereby write-accessing the counter 61, the counter value is decremented by one. On the other hand, the counter 61 is read-accessed, the bus buffer 62 is activated, and the counter value is output over the data bus 65 thereby making it possible for the CPU 1 to read the counter value. This allows the CPU 1 to know how many times the interrupt signal 10 was generated by the timer 2 during the execution of the control task. That is, because the counter is incremented by one when the control task is started in response to the interrupt signal 10 and is decremented by one when the control task is completed, the counter has a value of 0 as long as the control task is correctly executed. Thus, from the counter value, it is possible to determine whether the control task is correctly executed. If the counter has a value equal to or greater than 1, it can be concluded that a task overrun has occurred.

In the present embodiment, even if a long overrun over a plurality of intervals has occurred, the calculation result of the time-dependent task can be corrected by repeatedly performing the time-dependent as many times as the counter value.

In the case in which the specifications do not allow a delay greater than one interval, but it is not necessary to know the number of task overruns, a flip-flop may be used instead of the counter.

### Fourth Embodiment

Fig. 8 shows another embodiment of a digital controller according to the present invention. The present embodiment is different from the embodiment described above with reference to Fig. 2 in that a timer 2 that defines intervals T at which to execute a control task is connected to a CPU 1 via a bus 11 such that a current time measured by the timer 2 can be read by the CPU 1 and also different in that task overrun detection means 7 is implemented by means of software.

In this embodiment, after the CPU 1 is initialized, a control task is started, and a control task 3a and a control task 3b stored in a memory 4 are executed. The start time of the control task is read from the timer 2 and stored in the memory 4. As required, the start time of the next execution of the control task may be determined by adding the interval T to the current start time, and may be stored in the memory 4.

The process of controlling execution of control tasks according to the present embodiment is described in further detail below with reference to a time chart shown in Figs. 3A and 3B. In the present embodiment, no interrupt signal is used, and thus solid arrows in Fig. 3 simply denote task start times based on the interval T. In a state in which no task overrun occurs, the start time of a control task 3-2 is calculated from the start time of a task 3-1. After completion of the control task 3-1, the timer value of the timer 2 is repeatedly read to detect the arrival of the start time of the control task 3-2. If the arrival of the start time of the control task 3-2 is detected, the control task 3-2 is started. This method of starting a task is generally known as polling. A control task 3-3 and following control tasks are also started in a similar manner. That is, the time indicated by the timer 2 is repeated read, and the read time is compared with start times. Each time the read time becomes equal to a start time, the control task 3 is executed thereby achieving periodic execution of the task 3.

On the other hand, as is the case shown in Fig. 3B, if an increase in processing load causes an increase in execution time of a control task 3-4, and if the control task 3-4 is not completed in the period T, a task overrun occurs. In this case, when the control task 3-4 is completed, the start time (denoted by a broken arrow) at which control task 3-5 should have been started after the control task 3-4 has already gone. In this case, a task overrun is detected when the indicated by the timer 2 is read at the end of the control task 3-4 and compared with the predetermined start time of the control task 3-5.

When a task overrun is detected, a next control task 3-5 is handled such that only a part (a) of the control task 3-5 is executed to ensure that the time-dependent task is correctly executed at specified intervals. As described above, regardless of whether or not a task overrun occurs, each time the control task is started, the next control task start time is determined by adding the specified interval T to the control task start time currently stored in the memory, and the determined control task start time is stored in the memory, thereby achieving execution of control task at equal intervals by means of polling using the timer 2.

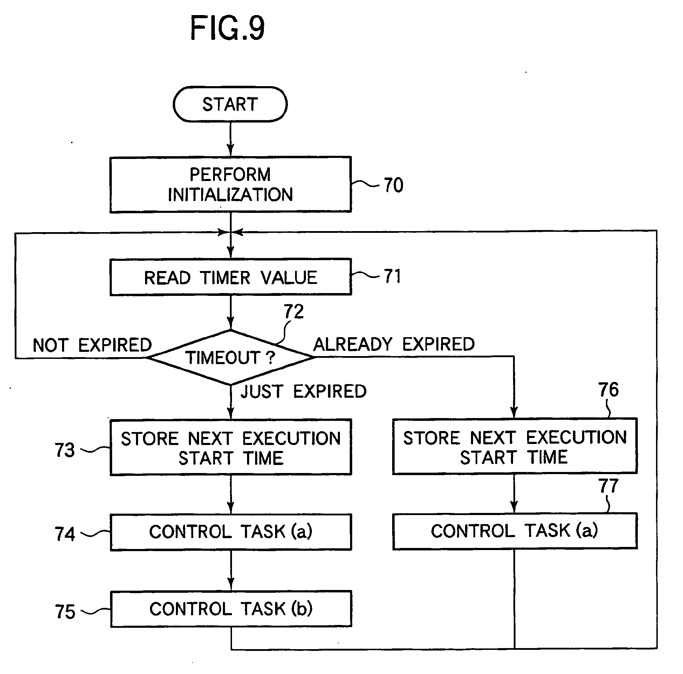

Referring to a flow chart shown in Fig. 9, the process of controlling execution of tasks by means of polling according to the present embodiment is described in further detail below. If the main routine of the task execution control program is started, initialization is performed in step S70, and the routine enters a control loop. In the control loop, a timer value is read in step S71 and compared with a start time at which to start a control task, in next step S72. If the comparison in step S72 indicates that the timer value has not yet reached the execution start time, the process returns to step S71. However, if the timer value is exactly equal to the execution start time, the process proceeds to step S73. In step S73, a next execution start time is stored. Furthermore, in steps S74 and S75, specified control tasks 3a and 3b are executed. After completion of those tasks 3a and 3b, the process returns to step S71.

On the other hand, if it is determined in step S72 that the timer value has already reached the execution start time, the process proceeds to step S76. In step S76, a next execution time is stored. Then in step S77, only the control task 3a, which is a time-dependent task, is executed in a state in which an overrun has occurred. In the present embodiment, as described above, control tasks are started by means of polling using the timer. This makes it possible to correctly execute the time-dependent control task 3a at controlled intervals with a less overhead time than needed in the technique based on interrupts.

### Fifth Embodiment

In the embodiment described above with reference to Fig. 8, the CPU 1 controls the execution interval of control tasks on the basis of the time read from the timer 2 via the bus 11. Alternatively, this process may be performed by means of hardware including a register and a comparator. The time read from the timer 2 is automatically loaded into the register so that, simply by accessing the output of the comparator, the CPU 1 can easily acquire the flag value indicating one of three states, that is, a first state in which the execution start time has not yet reached, a second state in which the execution start time has just reached, and a third state in which the execution start time has gone. This allows a further reduction in processing load due to the program of controlling execution of task.

### Sixth Embodiment

In the embodiment described above with reference to Fig. 7, the task overrun detection means 7 is realized by means of hardware including the counter 61 for counting the number of interrupts generated by the hardware timer 2. Alternatively, the task overrun detection means 7 may be realized by means of software. In this case, when an interrupt is generated by the hardware timer 2, a task is not directly started, but a small interrupt routine called an interrupt handler is started. The interrupt handling process including starting of a task and masking of an interrupt is performed by the interrupt handler realized by means of software. In this case, the task overrun detection means is implemented in the form of a program in the interrupt handler, and the number of interrupts is counted and stored in the memory, thereby achieving the similar functions to those achieved in the previous embodiments. This allows a simplification of hardware and a reduction in cost, although a slight increase in processing overhead occurs.

### Seventh Embodiment

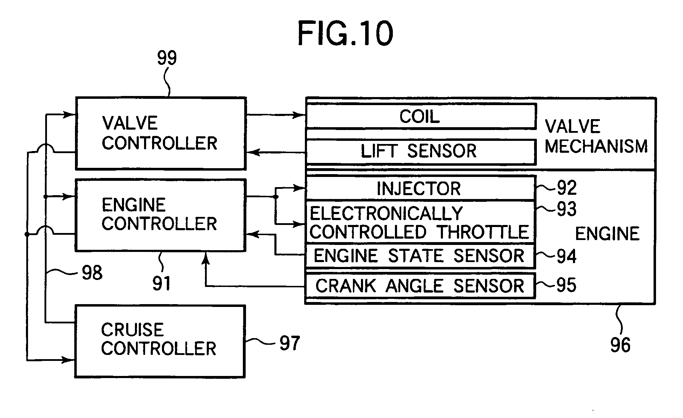

Fig. 10 shows a system in which a digital controller according to the present invention is used to control a vehicle. In Fig. 10, an engine controller 91 is responsible for control of an engine 96 and is realized by the digital controller according to one of above-described embodiments of the present invention. In the present embodiment, as can be understood from the above discussion, the values indicating the state of the engine can be precisely measured at predetermined intervals. Because the measurement values do not include a significant error, the engine can be precisely controlled on the basis of the measured values.

The engine controller 91 calculates the state values from information supplied from an engine state sensor 94, by means of a state observer realized by executing a time-dependent control task 3a. Furthermore, in accordance with a target value indicated by a control command, the engine controller 91 also calculates a control amount by executing a time-independent control task 3b. The calculated control amount is output to an injector 92 or an electronically controlled throttle 93. In accordance with control amount, a physical amount such as a fuel injection quantity or an intake air quantity is controlled thereby controlling the engine 96. The digital controller according to the present embodiment is capable of performing high-load control tasks and high-precision calculations of the state values varying quickly with time.

The engine 96 includes a crank angle sensor 95. In addition to the task execution control in response to interrupts generated by the timer 2 at equal intervals, the digital controller according to the present invention can also be used to periodically execute a control task in response to an interrupt generated in the form of a crack angle pulse by the crank angle sensor 95. Furthermore, the digital controller according to the present invention can be used to control an actuator mechanism such as an electromagnetic valve that needs to be controlled at very short intervals. That is, the digital controller according to the present invention is capable of detecting the state value by performing periodic high-speed calculations associated with a state observer based on the lift sensor while calculating the driving current by executing a control task at very short intervals.

In Fig. 10, a cruse controller 97 acquires state values such as a vehicle speed via a CAN (Controller Area Network) bus 98 and outputs a control command such as an engine torque value request command or a speed change request.

Although in the previous embodiments described above, the device to be controlled is directly connected to the digital controller, the digital controller according to the present invention can also be used to control a device connected via a communication line or a network as in the present example.

The digital controller according to the present invention may also be employed in general applications such as a servo control of a mechatronic apparatus such as an industrial robot. In controlling of a mechanical device, it is indispensable to perform calculations associated with a state observer based on mechanical motion analysis. The digital controller according to the present invention is capable of performing the servo control process while maintaining the precise execution intervals at which the calculation associated with the state observer is performed. The digital controller according to the present invention may also be applied to a communication device such as a facsimile machine. A process such as an asynchronous communication task that needs to be performed at precise intervals is assigned to a time-dependent task, and other general processes such as a printing process are assigned to a time-independent task, thereby allowing a high-efficiency use of processing power of the CPU 1.

The digital controller according to the present invention, as described above with reference specific embodiments, has the following advantages.
(1) If a control task being executed is not completed within a specified interval due to a temporary great increase in processing load and thus if a task overrun occurs, then, in the next execution of the control task, the time-dependent part of that control task is executed without being skipped, thereby preventing an error from occurring in the number of times the time-dependent part of the control task was executed.
(2) Even if a control task being executed is not completed within a specified interval due to a temporary great increase in processing load and thus if a task overrun occurs, the time-dependent part of the control task is executed exactly at equal intervals.
(3) It is possible to detect the number of occurrences of task overruns including the number of interrupt signals ignored because of occurrences of task overruns.
(4) Control tasks can be executed by means of polling at equal intervals with a small processing overhead. Even if a control task being executed is not completed within a specified interval due to a temporary great increase in processing load and thus if a task overrun occurs, it is possible to achieve a correct number of times that the time-dependent part of the control task was executed including the number of times that the control task was executed after the occurrence of task overrun.
(5) It is possible to detect the task execution status by means of software with a less processing overhead than by means of directly comparing the timer value.
(6) A simplification of hardware and a cost reduction can be achieved, although a slight increase in processing overhead occurs.

## Claims

1. A digital controller comprising execution control means for controlling execution of a control task (3) so as to be executed at predetermined intervals, and interrupt disable means for, when the control task (3) is being executed, disabling an interrupt for any other control task and any other task, **characterized in that**
said control task (3) is divided into two parts: a first task part (3a) that should be certainly executed at the predetermined intervals and including a calculation using a parameter associated with the predetermined interval; and a second task part (3b) including the remaining part of the control task other than the first task part and including a process using the result of the calculation performed in the first task part (3a); and
said execution control means, when the execution control means detects an overrun of the control task (3) as a result of a failure to complete the control task (3) within the predetermined interval, performs next execution of the control task (3) such that only the first task part (3a) of the control task (3) in the next execution is completed within the period of the next interval.

2. A digital controller according to claim 1, wherein the execution control means disables interrupt for next execution of the control task (3) until the execution of the second task part (3b) of the overrunning control task is completed, and, after completion of the second task part (3b), the execution control means executes only the first task part (3a) of the control task (3) in the next execution of the control task (3).

3. A digital controller according to at least one of claims 1 or 2, wherein if an interrupt signal for next execution of the control task (3) occurs when the second task part (3b) of the overrunning control task is being executed, the execution control means interrupts the execution of the second task part (3b) and executes only the first task part (3a) of the control task (3) in the next execution of the control task (3).

4. A digital controller according to claim 3, wherein after completion of the first task part (3a), the interrupted second task part (3b) is resumed.

5. A digital controller according to at least one of claims 1 to 4, wherein
a task overrun is detected using a holding circuit that is set in response to an interrupt signal (10) for the control task (3) and reset when the control task (3) started in response to that interrupt signal (10) is completed; and
in response to an interrupt signal (10) for next execution of the control task (3), the execution control means detects an occurrence of a task overrun on the basis of the content of the holding circuit.

6. A digital controller according to at least one of claims 1 to 5, wherein a task overrun is detected using a counter that is incremented in response to an interrupt signal for the control task and decremented when the control task is completed.

7. A digital controller according to at least one of claims 1 to 6, wherein a task overrun is detected on the basis of the number stored in a memory (4), the number being incremented each time the control task (3) is started and decremented when the control task is completed.

8. A digital controller according to at least one of claims 1 to 7, wherein
the interrupt signal (10) is periodically generated by a timer (2); and
a task overrun is detected using a comparator that compares the elapsed time counted by the timer (2) with the predetermined interval and outputs a signal taking one of three states depending on the comparison result, a first state of the three states indicating that the elapsed time has not yet reached an execution start time, a second state indicating that the elapsed time is equal to the execution start time, and a third state indicating that the elapsed time has already reached the execution start time.

9. A digital controller according to claim 1, **characterized by** an execution control means for controlling execution of a control task (3) by periodically reading a timer value from a timer (2), comparing the timer value with a predetermined execution start time, executing the control task (3) each time the timer value reaches the predetermined execution start time such that any task other than the control task (3) is not executed, thereby executing the control task (3) at a predetermined intervals.

10. An engine controller using a digital controller ac-cording to at least one of claims 1 to 9.

## Patentansprüche

1. Digitale Steuereinheit, die Ausführungssteuermittel zum Steuern der Ausführung einer Steueraufgabe (3), damit sie in vorgegebenen Intervallen ausgeführt wird, und Unterbrechungssperrmittel, um dann, wenn die Steueraufgabe (3) ausgeführt wird, eine Unterbrechung für irgendeine andere Steueraufgabe und irgendeine andere Aufgabe zu sperren, umfasst, **dadurch gekennzeichnet, dass**
die Steueraufgabe (3) in zwei Teile unterteilt ist: einen ersten Aufgabenteil (3a), der sicher in den vorgegebenen Intervallen ausgeführt werden sollte und eine Berechnung unter Verwendung eines dem vorgegebenen Intervall zugeordneten Parameters enthält; und einen zweiten Aufgabenteil (3b), der den verbleibenden Teil der Steueraufgabe mit Ausnahme des ersten Aufgabenteils enthält und einen Prozess enthält, der das Ergebnis der im ersten Aufgabenteil (3a) ausgeführten Berechnung verwendet; und
die Ausführungssteuermittel dann, wenn die Ausführungssteuermittel einen Überlauf der Steueraufgabe (3) als Folge davon, dass es nicht gelingt, die Steueraufgabe (3) innerhalb des vorgegebenen Intervalls abzuschließen, erfassen, die nächste Ausführung der Steueraufgabe (3) vornehmen, derart, dass nur der erste Aufgabenteil (3a) der Steueraufgabe (3) in der nächsten Ausführung innerhalb der Periode des nächsten Intervalls abgeschlossen wird.

2. Digitale Steuereinheit nach Anspruch 1, wobei die Ausführungssteuermittel die Unterbrechung für die nächste Ausführung der Steueraufgabe (3) sperren, bis der zweite Aufgabenteil (3a) der überlaufenden Steueraufgabe abgeschlossen ist, sperren und nach Abschluss des zweiten Aufgabenteils (3b) die Ausführungssteuermittel nur den ersten Aufgabenteil (3a) der Steueraufgabe (3) in der nächsten Ausführung der Steueraufgabe (3) ausführen.

3. Digitale Steuereinheit nach wenigstens einem der Ansprüche 1 oder 2, wobei dann, wenn ein Unterbrechungssignal für die nächste Ausführung der Steueraufgabe (3) auftritt, während der zweite Aufgabenteil (3b) der überlaufenden Steueraufgabe ausgeführt wird, die Ausführungssteuermittel die Ausführung des zweiten Aufgabenteils (3b) unterbrechen und nur den ersten Aufgabenteil (3a) der Steueraufgabe (3) in der nächsten Ausführung der Steueraufgabe (3) ausführen.

4. Steuereinheit nach Anspruch 3, wobei nach Abschluss des ersten Aufgabenteils (3a) der unterbrochene zweite Aufgabenteil (3b) wieder aufgenommen wird.

5. Digitale Steuereinheit nach wenigstens einem der Ansprüche 1 bis 4, wobei
ein Aufgabenüberlauf unter Verwendung einer Halteschaltung erfasst wird, die in Reaktion auf ein Unterbrechungssignal (10) für die Steueraufgabe (3) gesetzt wird und zurückgesetzt wird, wenn die Steueraufgabe (3), die in Reaktion auf das Unterbrechungssignal (10) gestartet wird, abgeschlossen ist; und
in Reaktion auf ein Unterbrechungssignal (10) für die nächste Ausführung der Steueraufgabe (3) die Ausführungssteuermittel ein Auftreten eines Aufgabenüberlaufs anhand des Inhalts der Halteschaltung erfassen.

6. Digitale Steuereinheit nach wenigstens einem der Ansprüche 1 bis 5, wobei ein Aufgabenüberlauf unter Verwendung eines Zählers erfasst wird, der in Reaktion auf ein Unterbrechungssignal für die Steueraufgabe inkrementiert wird und dann, wenn die Steueraufgabe abgeschlossen ist, dekrementiert wird.

7. Digitale Steuereinheit nach wenigstens einem der Ansprüche 1 bis 6, wobei ein Aufgabenüberlauf anhand der in einem Speicher (4) gespeicherten Zahl erfasst wird, wobei die Zahl jedesmal inkrementiert wird, wenn die Steueraufgabe (3) gestartet wird, und dekrementiert wird, wenn die Steueraufgabe abgeschlossen ist.

8. Digitale Steuereinheit nach wenigstens einem der Ansprüche 1 bis 7, wobei
das Unterbrechungssignal (10) durch einen Zeitgeber (2) periodisch erzeugt wird; und
ein Aufgabenüberlauf unter Verwendung eines Komparators erfasst wird, der die durch den Zeitgeber (2) gezählte verstrichene Zeit mit dem vorgegebenen Intervall vergleicht und ein Signal ausgibt, das in Abhängigkeit von dem Vergleichsergebnis einen von drei Zuständen annimmt, wobei ein erster Zustand der drei Zustände angibt, dass die verstrichene Zeit eine Ausführungsstartzeit noch nicht erreicht hat, ein zweiter Zustand angibt, dass die verstrichene Zeit gleich der Ausführungsstartzeit ist, und ein dritter Zustand angibt, dass die verstrichene Zeit bereits die Ausführungsstartzeit erreicht hat.

9. Digitale Steuereinheit nach Anspruch 1, **gekennzeichnet durch** Ausführungssteuermittel zum Steuern der Ausführung einer Steueraufgabe (3) **durch** periodisches Ablesen eines Zeitgeberwertes von einem Zeitgeber (2), Vergleichen des Zeitgeberwertes mit einer vorgegebenen Ausführungsstartzeit, Ausführen der Steueraufgabe (3) jedesmal, wenn der Zeitgeberwert die vorgegebene Ausführungsstartzeit erreicht, so dass keine von der Steueraufgabe (3) verschiedene Aufgabe ausgeführt wird, wodurch die Steueraufgabe (3) in vorgegebenen Intervallen ausgeführt wird.

10. Motorsteuereinheit, die eine digitale Steuereinheit nach wenigstens einem der Ansprüche 1 bis 9 verwendet.

## Revendications

1. Contrôleur numérique comprenant un moyen de contrôle d'exécution permettant de contrôler l'exécution d'une tâche de contrôle (3) de manière à ce qu'elle soit exécutée à des intervalles prédéterminés et un moyen de désactivation d'interruption permettant, quand la tâche de contrôle (3) est exécutée, de désactiver une interruption pour toute autre tâche de contrôle et toute autre tâche, **caractérisé en ce que**
ladite tâche de contrôle (3) est divisée en deux parties : une première partie de tâche (3a) qui devrait être exécutée avec certitude aux intervalles prédéterminés et incluant un calcul utilisant un paramètre associé à l'intervalle prédéterminé ; et une seconde partie de tâche (3b) incluant la partie restante de la tâche de contrôle autre que la première partie de tâche et incluant un traitement utilisant le résultat du calcul effectué dans la première partie de tâche (3a) ; et
ledit moyen de contrôle d'exécution, quand le moyen de contrôle d'exécution détecte une surcharge de la tâche de contrôle (3) suite à une incapacité à achever la tâche de contrôle (3) dans l'intervalle prédéterminé, accomplit la prochaine exécution de la tâche de contrôle (3) de sorte que seule la première partie de tâche (3a) de la tâche de contrôle (3) au cours de la prochaine exécution soit achevée dans la période du prochain intervalle.

2. Contrôleur numérique selon la revendication 1, dans lequel le moyen de contrôle d'exécution désactive l'interruption pour la prochaine exécution de la tâche de contrôle (3) jusqu'à ce que l'exécution de la seconde partie de tâche (3b) de la tâche de contrôle en surcharge soit achevée et, après l'accomplissement de la seconde partie de tâche (3b), le moyen de contrôle d'exécution n'exécute que la première partie de tâche (3a) de la tâche de contrôle (3) au cours de la prochaine exécution de la tâche de contrôle (3).

3. Contrôleur numérique selon au moins l'une des revendications 1 ou 2, dans lequel, si un signal d'interruption pour la prochaine exécution de la tâche de contrôle (3) se produit quand la seconde partie de tâche (3b) de la tâche de contrôle en surcharge est exécutée, le moyen de contrôle d'exécution interrompt l'exécution de la seconde partie de tâche (3b) et n'exécute que la première partie de tâche (3a) de la tâche de contrôle (3) au cours de la prochaine exécution de la tâche de contrôle (3).

4. Contrôleur numérique selon la revendication 3, dans lequel, après l'accomplissement de la première partie de tâche (3a), la seconde partie de tâche (3b) est reprise.

5. Contrôleur numérique selon au moins l'une des revendications 1 à 4, dans lequel
une surcharge de tâche est détectée en utilisant un circuit de maintien qui est déclenché en réponse à un signal d'interruption (10) pour la tâche de contrôle (3) et remis à zéro quand la tâche de contrôle (3) démarrée en réponse à ce signal d'interruption (10) est achevée ; et
en réponse à un signal d'interruption (10) pour la prochaine exécution de la tâche de contrôle (3), le moyen de contrôle d'exécution détecte l'apparition d'une surcharge de tâche sur la base du contenu du circuit de maintien.

6. Contrôleur numérique selon au moins l'une des revendications 1 à 5, dans lequel une surcharge de tâche est détectée en utilisant un compteur qui est incrémenté en réponse à un signal d'interruption pour la tâche de contrôle et qui est décrémenté quand la tâche de contrôle est achevée.

7. Contrôleur numérique selon au moins l'une des revendications 1 à 6, dans lequel une surcharge de tâche est détectée sur la base du nombre stocké dans une mémoire (4), le nombre étant incrémenté chaque fois que la tâche de contrôle (3) est démarrée et décrémenté quand la tâche de contrôle est achevée.

8. Contrôleur numérique selon au moins l'une des revendications 1 à 7, dans lequel
le signal d'interruption (10) est généré périodiquement par une minuterie (2) ; et
une surcharge de tâche est détectée en utilisant un comparateur qui compare le temps écoulé compté par la minuterie (2) avec l'intervalle prédéterminé et produit un signal adoptant un état parmi trois états en fonction du résultat de comparaison, un premier état parmi les trois états indiquant que le temps écoulé n'a pas encore atteint un temps de départ d'exécution, un second état indiquant que le temps écoulé est égal au temps de départ d'exécution et un troisième état indiquant que le temps écoulé a déjà atteint le temps de départ d'exécution.

9. Contrôleur numérique selon la revendication 1, **caractérisé par** un moyen de contrôle d'exécution permettant de contrôler l'exécution d'une tâche de contrôle (3) en lisant périodiquement une valeur de minuterie à partir d'une minuterie (2), en comparant la valeur de minuterie avec un temps de départ d'exécution prédéterminé, en exécutant la tâche de contrôle (3) chaque fois que la valeur de minuterie atteint le temps de départ d'exécution prédéterminé de sorte que toute tâche autre que la tâche de contrôle (3) ne soit pas exécutée, ce qui permet d'exécuter la tâche de contrôle (3) à des intervalles prédéterminés.

10. Dispositif de contrôle de moteur utilisant un contrôleur numérique selon au moins l'une des revendications 1 à 9.
